# EUROPEAN PATENT SPECIFICATION

(11) **EP 2 922 449 B1**
(45) Date of publication and mention of the grant of the patent: **04.01.2017**
(21) Application number: 13792951.9
(22) Date of filing: 13.11.2013
(51) Int. Cl.: A47J 36/16

(54) **RECEPTACLES IN WHICH FOODSTUFFS CAN BE HEATED**
BEHÄLTER ZUR ERWÄRMUNG VON LEBENSMITTELN DARIN
RÉCIPIENTS PERMETTANT DE CHAUFFER DES PRODUITS ALIMENTAIRES

(30) Priority: 21.11.2012 GB 201220922
(43) Date of publication of application: 30.09.2015
(73) Proprietor: Kenwood Limited, Havant, Hampshire PO9 2NH (GB)
(72) Inventor: FIELDS, Robert, Havant, Hampshire PO9 2NH (GB)
(74) Representative: Hector, Annabel Mary
(86) International application number: PCT/GB2013/052985
(87) International publication number: WO 2014/080177

(56) References cited:
- EP-A2- 0 419 144
- US-A- 5 617 774
- US-A1- 2006 278 095
- US-A1- 2008 257 168

## Description

This invention relates to receptacles, such as pots and pans, used for heating foodstuffs in preparation for consumption. Hereinafter, the term "receptacle" will be used to describe generally any form of container in which ingredients can be placed for heating, and it will be appreciated that, as used herein, references to heating are intended to include cooking, as well as simply warming, ingredients.

The fundamental design of such receptacles has long remained substantially unchanged; typically comprising some form of food/ingredient container that can be placed upon a heat source. The body of the container is often of a mental construction, and some form of handle is usually provided to allow the user to readily lift and move the container.

Conventional receptacles often require the user to constantly stir or mix the contents during the heating/cooking process, for example by manipulating a spoon or spatula, in order to avoid localised over-heating or burning of the ingredients. This requires the constant attention of the user, creating an unnecessary burden on the user's time.

In recognition of this problem, automatic stirring systems have been proposed. However, current proposals for such systems fall into two categories, each having its own problems and disadvantages. One such category provides a driver device, configured to sit on top of a receptacle, from which one or more rotating paddles depend down into the food. Some examples of this type of system are described in US20110214574-A1, DE3417745-A1 and GB2429415-A. Proposals of this general kind have drawbacks associated with the mounting of additional components on top of the receptacle, such as restricting the user's view into the receptacle and of its contents. Moreover, the placement of additional components, which tend to be relatively heavy, on top of the receptacle tends to create a top-heavy design, with the attendant potential risk of the arrangement toppling over when full of hot contents.

The alterative system category uses a paddle driven from beneath the receptacle; for example as suggested in US20080134915-A1. This alternative system offers benefits over the first, both with regard to visibility of the receptacle's contents and to stability, as any drive system is mounted near or beneath the base of the receptacle. This creates different problems, however, in that, in order to drive the paddle from below, there is a requirement for a drive shaft traversing the base of the receptacle; an arrangement which dictates the provision of complex sealing arrangements and tends to require the use of components that are difficult to keep clean.

Another problem with this type of solution is that there needs to be a drive source below the receptacle, which of course is where the heat source that is used to cook the food is often located. The temperatures under the bottom of a receptacle when placed on an average stove are well over 300 degrees Celsius, and thus the options for placing a motor in this environment are limited; resulting in an awkward and/or expensive design or the need for the device not to be able to be placed on a stove.

A further example of an automatic stirring system selectively mounted to a cooking vessel is disclosed in US2006278095-A1. The automatic stirring system includes a housing mounted to the handle, a ring gear rotatably mounted to the cooking vessel, a drive assembly for rotating the ring gear, and at least one stirring vane attached to the ring gear.

Systems in both of the existing proposal categories described above, moreover, often require an external electrical source of power to drive a motor to turn the paddles; thereby necessitating the use of a cable and introducing attendant problems associated with the use of cables near or over heat sources as well as restricting the mobility of the unit as a whole.

One alternative solution to power a device that is placed over a heat source is to use the thermoelectric effect produced by a Seebeck/Peltier chip which is configured, in known manner, to generate electric current in response to a heat differential across it, as suggested for example in KR211126246-A.

The present invention aims to provide a receptacle in which foodstuffs can be cooked and/or heated and which incorporates an automatic stirring means whilst avoiding the drawbacks and problems associated with existing proposals and, at the same time, fitting in with familiar cooking methods.

According to the invention there is provided a receptacle in which foodstuffs can be cooked and/or heated; the receptacle comprising a first container, capable of retaining the foodstuffs whilst they are heated, a second container supporting said first container for rotation therein and a stirring member disposed within said first container but constrained against rotation therewith; the second container being provided with handle means with which the receptacle can be manipulated; the receptacle further comprising drive means for rotating said first container relative to the second container and the stirring member; said drive means including motor means housed at least partly within said handle means.
In one preferred embodiment of the invention, the first and second containers are of similar construction.

In an alternative preferred embodiment, the second container has areas removed therefrom to allow a heat source placed below the receptacle to efficiently heat the first container. In such an embodiment, the second container may conveniently comprise merely a framework or "spider" arrangement to house the first container for rotation therein.

Preferably, though not necessarily, the axis of rotation of the first container is substantially coincident with the natural axis of the second container.

In a preferred arrangement, the base of the first container is provided with a protruding boss adapted to run in a bearing provided in the base of the second container.

Preferably, the receptacle further comprises means adapted to retain the first container within the second container when the receptacle as a whole is tilted or turned upside down.

In some preferred embodiments of the invention, the drive means utilised to turn the first container about said axis comprises an electric motor. Preferably, there is provided a motive power transfer arrangement adapted to engage with drive reception means formed on a surface of the first container.

Where an electric motor is provided to drive the first container in rotation, the motor may be powered by mains electricity, by one or more batteries, by an arrangement including super capacitors, and/or by thermoelectric generation.

In order that the invention may be clearly understood and readily carried into effect, one embodiment thereof will now be described, by way of example only, with reference to the accompanying drawings, of which:

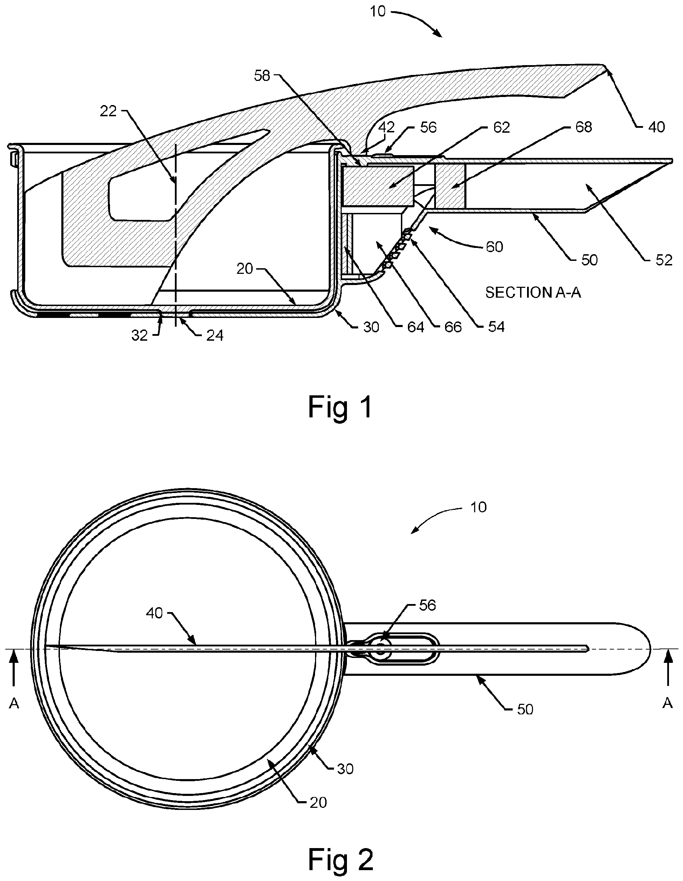

Figure 1 shows a cross-sectional view taken centrally (along the line A-A shown in Figure 2) through a receptacle in accordance with one example of the invention;
Figure 2 shows a plan view from above the receptacle;

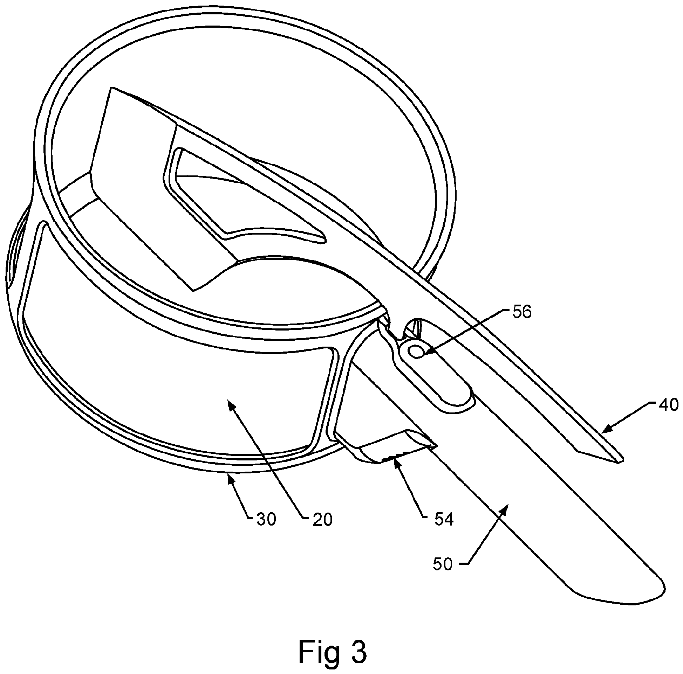

Figure 3 shows a perspective view of the receptacle; and

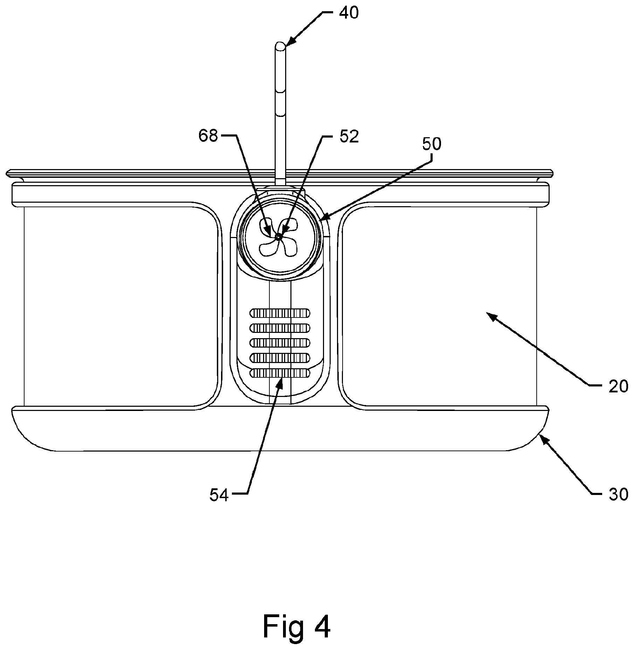

Figure 4 shows a side elevation of the receptacle, viewed along the handle axis.

Referring now to the drawings, there is shown a receptacle 10 in which foodstuffs can be cooked and/or heated. The receptacle 10 comprises a first, inner, container 20, capable of retaining the foodstuffs whilst they are heated, and a second, outer, container 30, supporting the first container for rotation therein about an axis 22. Also provided is a stirring member 40 which, in this example, takes the form of a paddle. The stirring member 40 is disposed within the first container but cannot rotate therewith about the axis 22 as it is supported in a fixed position by the outer container 30. The second container 30 is provided with a handle arrangement 50 with which the receptacle 10 as a whole can be manipulated, and the receptacle 10 is further provided with drive means 60 for rotating the first container 20 relative to the second container 30 and the stirring member; the drive means 60 including a motor device 62 housed at least partly within the handle arrangement 50.

It will thus be appreciated that, in the present example, the receptacle 10 resembles a food container 20, 30 of double-walled construction. However, the two containers 20 and 30 need not be of similar construction, or even or similar configuration, provided that the inner container 20 can rotate, within the outer container 30, about its axis 22. In some examples of the invention, the outer container 30 may have areas removed to allow a heat source placed below the receptacle 10 to heat the inner container 20 in an efficient way. Indeed, the outer container 30 in some embodiments comprises merely a framework or "spider" arrangement to house the inner container 20 for rotation therein.

Although, in the present example, the axis 22 about which the container 20 rotates is also the natural axis of the outer container 30, this need not necessarily be the case and in some embodiments the two containers may have different axes or centre lines. Furthermore, although in this example the container 20 is supported for rotation on a boss 24 that runs in a bearing 32 provided in the base of the container 30, any convenient means of providing a rotational support mounting can be used.

The drive means 60 used to turn the inner container 20 about its axis 22 is, in this example, an electric motor mounted within the handle 50 or otherwise supported by the outer container 30. Motor 62 drives the inner container 20 by means of gearing, or other motive power transfer arrangement, interfacing with gearing or other drive reception formations on a surface, preferably an external surface, of the driven container 20. In one example, the drive is transferred to the inner container 20 by means of a gearbox arrangement driving silicone rollers, or by a gear or tooth forms on the outer surface of the container 20. There is also preferably provided a mechanism that will keep the inner container 20 contained within the outer container 30 so that, when the receptacle 10 as a whole is tilted or turned upside down, the inner container 20 cannot inadvertently fall out. This mechanism preferably forms part of the handle/motor unit 50, 62, though it may be configured as a separate unit if preferred and simply supported from the handle 50 or the outer container 30.

Power can be supplied to drive the motor 62 by means such as mains electricity, batteries or super capacitors or, as shown in drawings, by thermoelectric generation. This driving technique uses a Seebeck chip 64 placed between the outer container 30 and a heat sink 66, which creates (in known manner) a temperature difference across the Seebeck chip 64 generating sufficient electrical current to drive the motor 62. The heat sink 66 can be of any material but in one preferred example comprised aluminium shaped to present a large surface area to dissipate the heat in an efficient manner.

To optimise the efficiency of the Seebeck chip 64 the temperature differential across it needs to be maximised. Accordingly, the temperature of the heat sink 66 needs to be kept as low as possible, and this could be achieved, for example, by using a very large heat sink. However, as room is limited inside the handle 50, where the heat sink is best mounted, it is preferred to use some of the electricity created by the Seebeck chip 64 to power a small fan 68 that draws air in through an air inlet 52 in the handle 50 and pushes the air though the heat sink 66 and then out through an air outlet 54 in the handle 50.

The design of the heat sink 66 is preferably optimised to provide the maximum heat dissipation into the air flow created by the fan 68. The air used to cool the heat sink 66 can also be used to cool the motor 62 and the gripped part of the handle 50. Both the air inlet 52 and the air outlet 54 can be protected or covered with some form of grill design to stop foreign objects entering the assembly. Moreover, the gripped part of the handle 50 may, if preferred, be provided with a heat-resisting cover or coating of a suitable material, such as a rubberised material.

A user of the receptacle 10 may utilise a control panel 56 mounted on the handle 50 to control the speed of the motor 62. The panel 56 preferably contains user-actuated controls permitting the user to start or stop the rotation of the inner container 20, and/or to vary the speed of rotation by implementing any known motor speed control procedure. In some embodiments, such implementation utilises a microprocessor or a microcontroller.

In some circumstances, the system may need to include some form of energy storage between operations and, in one such example, means were provided to supply power to the fan 68 to increase the efficiency of the Seebeck chip 64 before it reached its operating heat, thereby producing optimum power.

The actual movement or mixing of food contained in the inner container 20 is achieved by means of the stirring member 40. This component is, in this example, removably supported by the handle 50 in all degrees of rotation or translation. Accordingly, when the inner container 20 rotates, the food which it contains is moved against the stirring member 40, causing the food to be displaced and mixed. The stirring member 40 can take the form of a spatula or any other mixing implement (such as, but not limited to, a whisk or spoon) and may be made of, or coated with, any food-safe material. Whatever form it takes, the stirring member 40 is designed to be supported by the handle 50 so that it is easily removed by the user. In the present example, this is achieved by providing a small recess 58 in the handle 50 that receives a prong 42 from the stirring member 40. In any event, the member 40 needs to be mounted sufficiently securely to resist the significant amounts of torque that can be imparted to it during operation.

It will be appreciated that the stirring member 40 can be designed to be situated anywhere within the inner container 20 and is not necessarily formed into the flat shape as shown. Moreover, the support for the stirring member 40 may be located anywhere on the stationary outer container 30.

It may prove advantageous to allow the stirring member 40 to move, at least to an extent, in one or more degrees of degrees of rotation or translation with respect to the handle 50 and therefore the axis 22. Accordingly, the member 40 can, if preferred, be adapted to move or rotate either in response to contact with the food in the container 20 or by a mechanism driven by the motor 62, or by other means. The stirring member 40 could, additionally or alternatively, be adapted to bend or twist to achieve the same motion.

The arrangement whereby the inner container 20 is readily removed from the receptacle 10 and the food therein is stirred by the removable stirring member 40 facilitates cleaning of the system, with the same number and types of components requiring cleaning as a current pan and separate spoon/spatula. This is convenient, as it removes the requirement to make the whole assembly waterproof for cleaning purposes which, though possible, could add considerably cost to the product.

Although, in the example of the invention described above, the inner and outer containers 20 and 30 are both of circularly symmetric cylindrical shapes, it will be appreciated that this need not necessarily be the case, and that these components could alternatively take dissimilar forms. In that respect, either or both containers might, for example, conform to spherical or conical configurations, or to cuboids with multiple faces.

In an optional refinement, a force or pressure sensor can be provided in the region of the recess 58 in the handle 50 and configured to detect any excessive force applied to the stirring member 40, for example as a result of its use with overly thick foodstuffs, whereby an audible and/or visual warning signal can be generated to warn the user of the problem. Alternatively, or in addition to such a warning, the motor 62 can be automatically disabled.

## Claims

1. A receptacle in which foodstuffs can be cooked and/or heated; the receptacle (10) comprising a first container (20), capable of retaining the foodstuffs whilst they are heated, a second container (30) supporting said first container for rotation therein and a stirring member (40) disposed within said first container (20) but constrained against rotation therewith; the second container (30) being provided with handle means (50) with which the receptacle (10) can be manipulated; the receptacle further comprising drive means (60) for rotating said first container (20) relative to the second container (30) and the stirring member (40); said drive means (60) including motor means (62) housed at least partly within said handle means (50).

2. A receptacle according to claim 1, wherein the first and second containers (20, 30) are of similar construction.

3. A receptacle according to claim 1, wherein the second container (30) has areas removed therefrom to allow a heat source placed below the receptacle (10) to efficiently heat the first container (20).

4. A receptacle according to claim 3, wherein the second container (30) comprises merely a framework or "spider" arrangement to house the first container (20) for rotation therein.

5. A receptacle according to any preceding claim, wherein the axis of rotation (22) of the first container (20) is substantially coincident with the natural axis of the second container (30).

6. A receptacle according to any preceding claim, wherein the base of said first container (20) is provided with a protruding boss (24) adapted to run in a bearing (32) provided in the base of the second container (30).

7. A receptacle according to any preceding claim, further comprising means adapted to retain the first container (20) within the second container (30) when the receptacle (10) as a whole is tilted or turned upside down.

8. A receptacle according to any preceding claim, wherein the drive means (60) utilised to turn the first container (20) about said axis (22) comprises an electric motor (62).

9. A receptacle according to claim 8, further comprising a motive power transfer arrangement adapted to engage with drive reception means formed on a surface of the first container (20).

10. A receptacle according to claim 8 or claim 9, wherein said electric motor (62) is powered by mains electricity.

11. A receptacle according to claim 8 or claim 9, wherein said electric motor (62) is powered by one or more batteries.

12. A receptacle according to claim 8 or claim 9, wherein said electric motor (62) is powered by an arrangement including super capacitors.

13. A receptacle according to claim 8 or claim 9, wherein said electric motor (62) is powered by thermoelectric generation.

14. A receptacle according to claim 13, further comprising a Seebeck chip (64) placed between the second container (30) and a heat sink (66) and configured to generate electrical current to drive said motor (62).

## Patentansprüche

1. Behälter, in dem Lebensmittel gekocht und/oder erhitzt werden können; wobei der Behälter (10) Folgendes umfasst: einen ersten Behälter (20) zum Aufnehmen des Lebensmittels, während es erhitzt wird, einen zweiten Behälter (30), der den genannten ersten Behälter für eine Rotation darin trägt, und ein Rührelement (40), das in dem genannten ersten Behälter (20) angeordnet ist, aber an einer Rotation damit gehindert wird; wobei der zweite Behälter (30) mit einem Griff (50) versehen ist, mit dem der Behälter (10) manipuliert werden kann; wobei der Behälter ferner Antriebsmittel (60) zum Drehen des genannten ersten Behälters (20) relativ zu dem zweiten Behälter (30) und dem Rührelement (40) umfasst; wobei das genannte Antriebsmittel (60) einen Motor (62) aufweist, der wenigstens teilweise in dem genannten Griff (50) untergebracht ist.

2. Behälter nach Anspruch 1, wobei der erste und der zweite Behälter (20, 30) ähnlich aufgebaut sind.

3. Behälter nach Anspruch 1, wobei Bereiche des zweiten Behälters (30) entfernt sind, damit eine Wärmequelle unterhalb des Behälters (10) platziert werden kann, um den ersten Behälter (20) effizient zu erwärmen.

4. Behälter nach Anspruch 3, wobei der zweite Behälter (30) lediglich eine Rahmen- oder "Spinnen"-Anordnung zum Aufnehmen des ersten Behälters (20) für eine Drehung darin umfasst.

5. Behälter nach einem vorherigen Anspruch, wobei die Drehachse (22) des ersten Behälters (20) im Wesentlichen mit der natürlichen Achse des zweiten Behälters (30) zusammenfällt.

6. Behälter nach einem vorherigen Anspruch, wobei die Basis des genannten ersten Behälters (20) mit einer vorstehenden Nabe (24) versehen ist, die so ausgelegt ist, dass sie in einem in der Basis des zweiten Behälters (30) vorgesehenen Lager (32) laufen kann.

7. Behälter nach einem vorherigen Anspruch, der ferner Mittel zum Halten des ersten Behälters (20) in dem zweiten Behälter (30) ausgelegt ist, wenn der Behälter (10) insgesamt gekippt oder umgedreht wird.

8. Behälter nach einem vorherigen Anspruch, wobei das Antriebsmittel (60), das zum Drehen des ersten Behälters (20) um die genannte Achse (22) benutzt wird, einen Elektromotor (62) umfasst.

9. Behälter nach Anspruch 8, der ferner eine Antriebskraft-Übertragungsanordnung umfasst, die zum Eingreifen in ein auf einer Oberfläche des ersten Behälters (20) ausgebildetes Antriebsaufnahmemittel ausgelegt ist.

10. Behälter nach Anspruch 8 oder Anspruch 9, wobei der genannte Elektromotor (62) mit Netzstrom betrieben wird.

11. Behälter nach Anspruch 8 oder Anspruch 9, wobei der genannte Elektromotor (62) mit einer oder mehreren Batterien gespeist wird.

12. Behälter nach Anspruch 8 oder Anspruch 9, wobei der genannte Elektromotor (62) mit einer Anordnung mit Superkondensatoren gespeist wird.

13. Behälter nach Anspruch 8 oder Anspruch 9, wobei der genannte Elektromotor (62) durch thermoelektrische Erzeugung gespeist wird.

14. Behälter nach Anspruch 13, der ferner einen Seebeck-Chip (64) umfasst, der zwischen dem zweiten Behälter (30) und einem Kühlkörper (66) platziert und zum Erzeugen von elektrischem Strom zum Antreiben des genannten Motors (62) konfiguriert ist.

## Revendications

1. Récipient dans lequel des produits alimentaires peuvent être cuits et/ou chauffés ; le récipient (10) comprenant un premier contenant (20), capable de retenir les produits alimentaires pendant qu'ils sont chauffés, un second contenant (30) supportant ledit premier contenant en rotation, et un élément de mélange (40) disposé à l'intérieur dudit premier contenant (20), mais résistant à sa rotation ; le second contenant (30) étant muni d'un moyen de saisie (50) avec lequel le récipient (10) peut être manipulé ; le récipient comprenant en outre un moyen d'entraînement (60) permettant la rotation dudit premier contenant (20) par rapport au second contenant (30) et à l'élément de mélange (40) ; ledit moyen d'entraînement (60) comprenant un moyen moteur (62) logé au moins partie à l'intérieur dudit moyen de saisie (50).

2. Récipient selon la revendication 1, dans lequel les premier et second contenants (20, 30) sont de fabrication similaire.

3. Récipient selon la revendication 1, dans lequel le second contenant (30) comprend des régions qui en ont été retirées afin de permettre à une source de chaleur placée sous le récipient (10) de chauffer efficacement le premier contenant (20).

4. Récipient selon la revendication 3, dans lequel le second contenant (30) comprend simplement une structure ou un aménagement en « araignée » pour y recevoir le premier contenant (20) en rotation.

5. Récipient selon l'une quelconque des revendications précédentes, dans lequel l'axe de rotation (22) du premier contenant (20) coïncide pratiquement avec l'axe naturel du second contenant (30).

6. Récipient selon l'une quelconque des revendications précédentes, dans lequel la base dudit premier contenant (20) est munie d'une bosse en saillie (24) conçue pour se déplacer dans un chemin de roulement (32) situé à la base du second contenant (30).

7. Récipient selon l'une quelconque des revendications précédentes, comprenant en outre un moyen conçu pour retenir le premier contenant (20) à l'intérieur du second contenant (30) quand le récipient (10) dans son ensemble est incliné ou retourné vers le bas.

8. Récipient selon l'une quelconque des revendications précédentes, dans lequel le moyen d'entraînement (60) utilisé pour faire tourner le premier contenant (20) par rapport audit axe (22) comprend un moteur électrique (62).

9. Récipient selon la revendication 8, comprenant en outre un montage de transfert de puissance motrice conçu pour entrer en prise avec un moyen de réception d'entraînement formé sur une surface du premier contenant (20).

10. Récipient selon la revendication 8 ou 9, dans lequel ledit moteur électrique (62) est alimenté par le réseau de distribution électrique.

11. Récipient selon la revendication 8 ou 9, dans lequel ledit moteur électrique (62) est alimenté par une ou plusieurs batteries.

12. Récipient selon la revendication 8 ou 9, dans lequel ledit moteur électrique (62) est alimenté par un montage comprenant des super-condensateurs.

13. Récipient selon la revendication 8 ou 9, dans lequel ledit moteur électrique (62) est alimenté par un générateur thermoélectrique.

14. Récipient selon la revendication 13, comprenant en outre une puce Seebeck (64) placée entre le second contenant (30) et un dissipateur de chaleur (66), et conçue pour générer un courant électrique pour commander ledit moteur (62).
